# EUROPEAN PATENT APPLICATION

(11) **EP 4 749 419 A1**
(43) Date of publication of application: **27.05.2026**
(21) Application number: 24842095.2
(22) Date of filing: 07.06.2024
(51) Int. Cl.: G06F 3/0483

(54) **INTERACTION METHOD AND APPARATUS, DEVICE, AND MEDIUM**

(30) Priority: 18.07.2023 CN 202310884277
(71) Applicant: Beijing Zitiao Network Technology Co., Ltd., Beijing 100190 (CN)
(72) Inventor: CHEN, Lijun, Beijing 100028 (CN); JIN, Xiaoshu, Beijing 100028 (CN)
(74) Representative: Isarpatent
(86) International application number: PCT/CN2024/098250
(87) International publication number: WO 2025/016095

(57) **Abstract**

The embodiments of the disclosure provides a method, apparatus, device and storage medium for interacting. In the method, a target interface is presented. The target interface comprises a navigation area and a content area. A content corresponding to a target tab in the navigation area is presented in a first content layout within the content area. Further, the content corresponding to the target tab is presented in a second content layout within the content area in response to detecting a predetermined operation associated with the target interface. The second content layout is different from the first content layout. In addition, the tab label corresponding to the target tab in the navigation area is adjusted, to indicate a switchable state of the second content layout. In this way, the functions that can be implemented by means of the navigation area may be expanded, and the difficulty of a user to adapt to expanded functions may be reduced, thereby improving the user operation efficiency.

## Description

This application claims the benefit of Chinese Patent Application No. 202310884277.4, filed July 18, 2023, entitled "METHOD, APPARATUS, DEVICE, AND MEDIUM FOR INTERACTING," the entire content of which is incorporated herein by reference.

### FIELD

Embodiments of the present disclosure generally relate to the field of computers, and in particular, to methods and apparatus for interaction, device, and computer-readable storage medium.

### BACKGROUND

With the rapid development of Internet technologies, various applications have become an important tool in people's daily life. Different applications often have different functions, and users may implement specific services through applications with specific functions.

**In** order to meet people's increasing demand for entertainment and office, more and more functions are integrated into applications, and more and more contents may be provided by applications. Therefore, multiple interfaces are often provided in an application to provide different contents and functions. In the presence of multiple interfaces, a navigation area including multiple tabs may be provided in the application to enable redirection between interfaces based on the tabs in the navigation area. Therefore, how to fully utilize the navigation area to provide richer interactive functions becomes an urgent problem to be solved.

### SUMMARY

In a first aspect of the present disclosure, a method for interacting is provided. In the method, a target interface is presented. The target interface comprises a navigation area and a content area. Content corresponding to a target tab in the navigation area is presented in a first content layout within the content area. Further, the content corresponding to the target tab is presented in a second content layout within the content area, in response to detecting a predetermined operation associated with the target interface. The second content layout is different from the first content layout. In addition, a tab label corresponding to the target tab in the navigation area is adjusted to indicate a switchable state of the second content layout.

In a second aspect of the present disclosure, an apparatus for interacting is provided. The device comprises a first presentation module, a second presentation module and an adjustment module. The first presentation module is configured to present a target interface, where the target interface comprises a navigation area and a content area, a content corresponding to a target tab in the navigation area is presented in a first content layout within the content area. The second presentation module is configured to present the content corresponding to the target tab in a second content layout within the content area, in response to detecting a predetermined operation associated with the target interface the second content layout being different from the first content layout. The adjustment module is configured to adjust a tab label corresponding to the target tab in the navigation area, to indicate a switchable state of the second content layout.

In a third aspect of the present disclosure, an electronic device is provided. The electronic device comprises: at least one processing unit; and at least one memory coupled to the at least one processing unit and storing instructions for execution by the at least one processing unit, the instructions, when executed by the at least one processing unit, causing the electronic device to perform the method according to the first aspect of the present disclosure.

In a fourth aspect of the present disclosure, there is provided a computer-readable storage medium having stored thereon a computer program which, when executed by a processor, causes the processor to implement the method according to the first aspect of the present disclosure.

It should be understood that the content described in this Summary is not intended to define the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of embodiments of the present disclosure will become more apparent from the following detailed description in conjunction with the accompanying drawings. In the drawings, the same or similar reference numbers refer to the same or similar elements, where:
FIG. 1 illustrates a schematic diagram of an example environment in which embodiments of the present disclosure may be implemented;
FIG. 2A to FIG. 2E illustrate schematic diagrams of interacting examples according to some embodiments of the present disclosure;
FIG. 3 illustrates a flowchart of a method for interacting according to some embodiments of the present disclosure;
FIG. 4 illustrates a block diagram of an example apparatus for interacting according to some embodiments of the present disclosure; and
FIG. 5 illustrates a block diagram of a device in which one or more embodiments of the present disclosure may be implemented.

### DETAILED DESCRIPTION

Embodiments of the present disclosure will be described in more detail below with reference to the accompanying drawings. While certain embodiments of the present disclosure are illustrated in the accompanying drawings, it is to be understood that the present disclosure may be implemented in various forms, and should not be construed as limited to the embodiments set forth herein, but rather, these embodiments are provided for a more thorough and complete understanding of the present disclosure. It is to be understood that the drawings and embodiments of the present disclosure are for exemplary purposes only and are not intended to limit the scope of the present disclosure.

In the description of the embodiments of the present disclosure, the terms "including" and the like are to be understood to be open-ended, that is, "including but not limited to". The term "based on" is to be understood as "based at least in part on". The terms "one embodiment" or "the embodiment" is to be understood as "at least one embodiment". The term "some embodiments" is to be understood as "at least some embodiments". Other explicit and implicit definitions may also be included below. As used herein, the term "model" may indicate an association relationship between various data. For example, the association relationship may be obtained based on various technical solutions currently known and/or to be developed in the future.

The term "in response to" as used herein indicates a state in which a corresponding event occurs or a corresponding condition is satisfied. It will be appreciated that the timing of execution of a subsequent action performed in response to the event or condition is not necessarily strongly correlated with the time at which the event occurs or the condition holds. For example, in some cases, the subsequent action may be performed immediately when the event occurs or the condition holds; while in other cases, the subsequent action may be performed after a period of time elapses after the event occurs or the condition holds.

It may be understood that the data involved in the technical solution (including but not limited to the data itself, or the acquisition or use of the data) should comply with the requirements of the corresponding laws and related regulations.

It may be understood that, before the technical solutions disclosed in the embodiments of the present disclosure are used, the types, the usage scope, the usage scenario and the like of personal information to which the present disclosure relates should be notified to a user and the authorization of the user should be obtained in an appropriate manner according to the relevant laws and regulations.

For example, in response to receiving an active request from a user, prompt information is sent to the user to explicitly prompt the user that the requested operation will need to acquire and use the personal information of the user. Thus, the user may autonomously select whether to provide the personal information to software or hardware, such as an electronic device, an application program, a server or a storage medium, which performs the operation of the technical solution of the present disclosure, according to the prompt information.

As an optional but non-limiting embodiment, in response to receiving the active request of the user, the prompt information may be sent to the user for example in a pop-up window in which the prompt information may be presented in texts. In addition, the pop-up window may further carry a selection control for the user to select "agree" or "not agree" to provide personal information to the electronic device.

It may be understood that the foregoing processes of notification and obtaining user authorization are merely illustrative, and do not constitute a limitation to the embodiments of the present disclosure, and other ways satisfying related laws and regulations may also be applied to the embodiments of the present disclosure.

As briefly mentioned above, multiple tabs tend to exist in a navigation area, so that the user may implement redirections between different interfaces in the application. In the existing solutions, the function of each tab and the tab label in the navigation area are often fixed. For example, a home tab in a navigation area of an application is often used only to present a home corresponding to the application, and a label of the tab is fixed as a "Home". Therefore, the interaction function of the navigation area in the existing solution is only limited to implementing the interface redirections in the application. However, the navigation area often occupies a certain proportion of a display area in a user interface, so it is desirable to be able to more fully utilize the navigation area to provide richer interaction functions for users.

To this end, embodiments of the present disclosure provide a solution for expanding interaction functions of tabs in the navigation area. Specifically, according to an interaction solution of an embodiment of the present disclosure, a target interface including a navigation area and a content area is presented. Further, in response to detecting a predetermined operation, a layout of the content corresponding to the target tab presented in the content area is changed, and the tab label of the target tab is adjusted to indicate a switchable state of a current content layout.

As will be more clearly understood from the following description, according to embodiments of the present disclosure, the content layout is changed in response to the predetermined operation, and the tab label corresponding to the current tab is adjusted to indicate the switchable state of the current content layout. In this way, on one hand, the function of the tab in the navigation area may be expanded on the basis of implementing the interface redirections, to switch the layout which is used for presenting the content of the current tab. In this way, the interaction function that may be achieved by means of the navigation area may be expanded without enlarging the display area occupied by the navigation area in the user interface, thereby improving the user experience. On the other hand, by indicating the switchable state of the content layout in the adjusted tab label of the current tab, it is possible to effectively inform the user that the content layout may be changed by means of a control corresponding to the current tab. In this way, the difficulty for a user to adapt to the above expanded function may be reduced, and the convenience of the user to switch the content layout may be improved, thereby improving the user operation efficiency.

### Example Environment

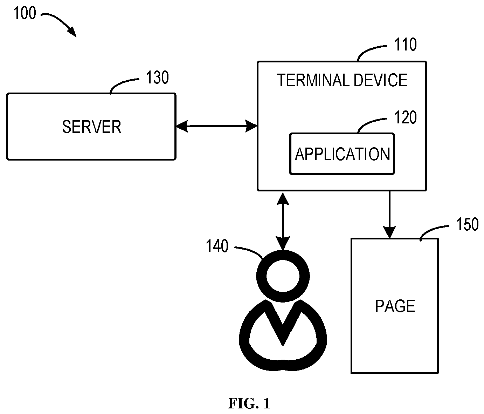

Various example implementations of this solution will be described in detail below with reference to the accompanying drawings. Reference is first made to FIG. 1, which illustrates a schematic diagram of an example environment 100 in which embodiments of the present disclosure can be implemented. In this example environment 100, an application 120 is installed in a terminal device 110. A user 140 may interact with the application 120 via the terminal device 110 and/or an attachment device of the terminal device 110. Examples of the application 120 include, but are not limited to, a content acquisition application 120 (e.g., a video online acquisition application 120, or a graphics online acquisition application 120), an online shopping application 120, and the like.

In the example environment 100 of FIG. 1, if the application 120 is in an active state, the terminal device 110 may present interfaces 150 of the application 120. The interfaces 150 may comprise various types of interfaces that the application 120 can provide, such as content presentation interfaces, content creation interfaces, content posting interfaces, message interfaces, a personal home, and so on. The application 120 may provide a content viewing function for viewing of various types of contents posted in the application 120. Via the corresponding interfaces 150, the application 120 may provide online contents, such as media contents, to the user 140. In the context of the present disclosure, "media contents" include one or more types of contents, such as images, image sets, videos, animated images, audios, texts, and the like.

In some embodiments, the terminal device 110 may communicate with a server 130 to enable provision of services to the application 120. The terminal device 110 may be any type of mobile terminals, fixed terminals, or portable terminals, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the terminal device 110 can also support any type of interfaces (such as a "wearable" circuit, etc.) for the user 140. The server 130 may be various types of computing systems/servers that are able of providing computing capabilities, including, but not limited to, mainframes, edge computing nodes, computing devices in a cloud environment, and the like.

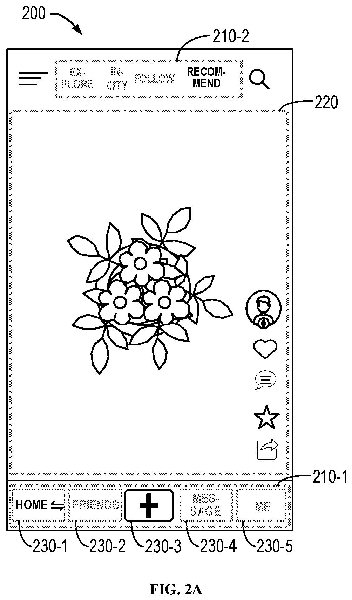

According to some embodiments of the present disclosure, the terminal device 110 may present a interface 150 including a navigation area and a content area. Further, in response to detecting a predetermined operation, the terminal device 110 may change a layout of a content corresponding to a target tab presented in the content area, and adjust a tab label of the target tab to indicate a switchable state of a current content layout. This will be described in further detail below in connection with FIGS. 2A to 2E. It is to be understood that the structures and functions of the individual elements in the environment 100 are described for illustrative purposes only and do not imply any limitation to the scope of the present disclosure.

### Example Interaction

An overview according to an exemplary embodiment of the present disclosure will be described below with reference to FIGS. 2A to 2E. FIGS. 2A to 2E illustrate schematic diagrams of interaction examples according to some embodiments of the present disclosure. It is to be understood that the interface 150 shown in FIGS. 2A to 2E is merely an example, and in practice various designs may be present. For example, individual graphical elements and/or controls in the interface 150 may have different arrangements and different visual representations, one or more of the elements and/or controls may be omitted or replaced, and there may be one or more other elements and/or controls. In addition, any suitable content may be included in the interface 150. The scope of the present disclosure is not limited in this respect.

In some embodiments, the terminal device 110 presents the target interface 150 that comprises the navigation area and the content area. Content corresponding to a target tab in the navigation area is presented in a first content layout in the content area. As shown in FIG. 2A, the interface 150 of the application 120 presented by the terminal device 110 may comprise two navigation areas 210-1 and 210-2 (hereinafter referred to individually or collectively as the navigation area 210) and one content area 220. In the interaction example 201 of FIG. 2A, the navigation area 210-1 is located at the bottom of the interface 150, the content area 220 is located in the middle of the interface 150, and the navigation area 210-2 is located at the top of the interface 150.

It is to be understood that the numbers and locations of the navigation area 210 and the content area 220 in FIG. 2A are merely exemplary. The interface 150 may comprise more content areas 220, or more or fewer navigation areas 210, and the content areas 220 and the navigation areas 210 may be located at any other suitable location in the interface 150, and the scope of the present disclosure is not limited in this respect. For example, the interface 150 may comprise only one navigation area 210, and the navigation area 210 is presented in a floating manner at the right or left edge of the content area 220.

For the purpose of illustration, the following descriptions will be provided with reference to the navigation area 210-1 in FIG. 2A. It is to be understood that the solutions according to embodiments of the present disclosure may be applicable to the navigation area 210-2 and any other suitable navigation area. As shown in FIG. 2A, the navigation area 210-1 illustratively comprises 5 tabs 230-1, 230-2, 230-3, 230-4, and 230-5 (hereinafter referred to individually or collectively as a tab 230). It is to be understood that the number of the tabs 230 included in the navigation area 210-1 may be any other suitable value, for example, three, four, or the like.

As shown in FIG. 2A, the tab 230-1 corresponds to the home of the application 120, and its tab label is characters "Home 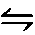 ", which will be further described in detail below. The tab 230-2 corresponds to a friend interface of the application 120, which may, for example, be used to present contents associated with friends of the user 140 in the application 120. The tab label for the tab 230-2 is a text "Friend". The tab 230-3 corresponds to a content creation interface of the application 120, which may be used, for example, to trigger a camera of the terminal device 110 or invoke a material library in the terminal device 110 for the user 140 to create a content. The tab label for the tab 230-3 is a symbol "+". The tab 230-4 corresponds to a message interface of the application 120, which may be used, for example, to present notifications, private messages, friend activities, and the like in the application 120. The tab label for the tab 230-4 is a text "Message". Further, the tab 230-5 corresponds to a personal home of the application 120, which may be used, for example, to present personal work of the user 140, social relationships of the user 140 with other users, and so on. The tab label for the tab 230-5 is a text "Me". It is to be understood that the tabs and tab labels described above are merely illustrative, and the scope of the present disclosure is not limited in this respect.

In the example of FIG. 2A, the terminal device 110 currently presents a content of a sub-tab "recommend" in the home of the application 120. It can be seen that only a single illustrative media content, i.e., potted flowers, is presented in the content area 220. In the context of the present disclosure, the layout style in which a single media content is presented in the content area 220 may also be referred to as a one-by-one browsing mode. For the purpose of illustration, the following descriptions will be provided by taking the tab 230-1 in FIG. 2A corresponding to the target tab as an example, and thus the target tab may be referred to as the target tab 230 or the target tab 230-1. It is to be understood that the solutions according to embodiments of the present disclosure may be likewise applicable to any other suitable tab 230, and the scope of the present disclosure is not limited in this respect.

In some embodiments, the terminal device 110 may detect a predetermined operation associated with the target interface 150. The predetermined operation may be used, for example, to change (or switch) a content layout of the contents corresponding to the target tab 230. In one example, the predetermined operation may be triggering, such as pressing, on the target tab 230. The target tab 230 may comprise, for example, a switch control for switching the layout style of the content area 220. Referring to FIG. 2A, the predetermined operation may be, for example, the user 140 pressing the home tab 230-1 by hand. It is to be understood that, depending on the implementation of the terminal device 110, the triggering on the target tab 230 may further comprise any other suitable operation, such as a single mouse click, a double mouse click, a mouse selection box, a mouse hover, a finger touch, a stylus touch, a stylus press, and the like. In another example, the predetermined operation may be a gesture operation corresponding to a target direction in the target interface 150. Examples of the gesture operations include, but are not limited to, sliding left from the right edge of the interface 150, sliding right within the interface 150, holding the press for more than a predetermined time threshold (e.g., 3 seconds, 5 seconds, etc.), tapping with a knuckle, etc. In this way, the user 140 can change the content layout in a convenient operation manner, thereby improving the operation efficiency and improving the user experience.

Alternatively, the predetermined operation may be a specific motion of the terminal device 110 itself, such as a change in an orientation of the terminal device 110, shaking of the terminal device 110 by the user 110, and the like. In some embodiments, the terminal device 110 may obtain motion information of the device itself, and detect a predetermined operation associated with the target interface 150 based on the motion information. In an example, the terminal device 110 may obtain the orientation of the device by means of a direction sensor. In the example of FIG. 2A, the orientation of the terminal device 110 is a vertical orientation. The vertical orientation of the terminal device 110 may also be referred to as a portrait mode or a portrait display mode. It is to be understood that the orientation of the terminal device 110 also includes any other suitable orientation, such as a horizontal orientation. The horizontal orientation of the terminal device 110 may also be referred to as a landscape mode or a landscape display mode. In another example, the terminal device 110 may obtain the motion information of the device by means of an acceleration sensor and/or a gyroscope, and further determine whether the user 140 shakes the terminal device 110. In this way, it may be supported to perform switching of the content layout by moving the terminal device 110 by the user 140, thereby enriching means of interaction, further improving the operation efficiency and improving the user-friendliness of the application 120. It is to be understood that the predetermined operation may also include any other suitable user operation, and the scope of the present disclosure is not limited in this respect.

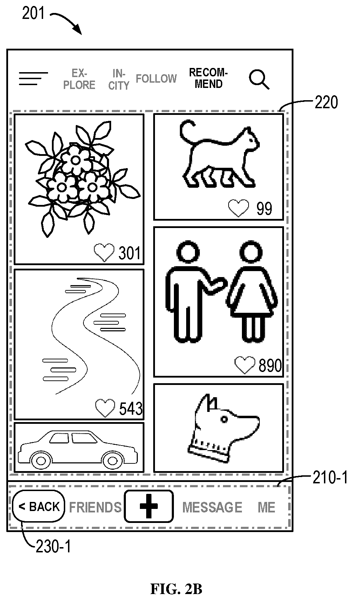

Further, if a predetermined operation associated with the target interface 150 is detected, the terminal device 110 presents the content corresponding to the target tab 230 in a second content layout in the content area 220. The second content layout is different from the first content layout. In other words, the terminal device 110 will change (i.e., switch) the layout of the content corresponding to the target tab 230 in the content area 220. Referring to FIG. 2B, in response to detecting the predetermined operation mentioned above, the terminal device 110 may present a plurality of media contents in columns in the content area 220. In the example of FIG. 2B, the terminal device 110 presents a preview of all or part of six media contents in a staggered manner in two columns. In the context of the present disclosure, the layout style in which the plurality of media contents are presented in two columns in the content area 220 may also be referred to as a dual-column browsing mode. It is to be understood that the terminal device 110 may also present a plurality of media contents in one or more columns (for example, three columns, four columns, etc.), and the media contents in different columns may also be aligned rather than staggered. The scope of the present disclosure is not limited in this respect.

Furthermore, the terminal device 110 may also present the plurality of media contents in the content area 220 in any other suitable content layout. For example, the terminal device 110 may present the plurality of media contents in rows in the content area 220. For example, the terminal device 110 may present the plurality of media contents in any suitable alignment manner in one row, two rows, or more rows. In the context of the present disclosure, the layout style in which the plurality of media contents are presented in two rows in the content area 220 may also be referred to as a dual-row browsing mode. In this way, the content layout styles available for selection by the user 140 may be richer, thereby meeting different preferences or requirements of different users 140, and further improving the user experience.

In some embodiments, the number of columns (or number of rows) and the alignment manner may depend on the orientation of the terminal device 110. For example, in the portrait mode shown in FIG. 2B, the terminal device 110 may present the plurality of media contents in a staggered manner in two columns. In the landscape mode (not shown), the terminal device 110 may present the plurality of media contents in a mutually aligned manner in three or four columns. In this way, the content layout may better adapt to the current orientation of the terminal device 110, thereby providing a better browsing experience for the user 140.

Further, the terminal device 110 adjusts the tab label corresponding to the target tab 230 in the navigation area 210 to indicate the switchable state of the second content layout. In some embodiments, the tab label may present description information and/or a switch symbol. The description information is used to describe the switchable state of the content layout in the target tab or the content area. The switch symbol indicates the switchable state of the content layout in the content area. The tab label will be described in further detail below.

In some embodiments, the tab label may present, after adjustment, the description information describing the switchable state of the second content layout, and/or the switch symbol indicating the switchable state of the second content layout. In the context of the present disclosure, the switchable state may refer to a state in which contents in the content area 220 may be switched from a current layout to another different layout.

In some embodiments, the switchable state of the second content layout may comprise switching from the second content layout back to the first content layout, for example. In the interaction example 201 of FIG. 2B, the tab label of the tab 230-1 is adjusted to present a text "Back", such description information prompting the user 140 that the content layout may be switched from the current dual-column browsing mode back to the initial, one-by-one browsing mode (as shown in FIG. 2A). In this way, the user 140 may be explicitly prompted with the switchable state of the current layout. The adjusted tab label of the tab 230-1 also presents a switch symbol "<", which further reinforces to the user 140 in a symbolized form that the previous content layout may be returned to by triggering the tab 230-1. In addition, the tab 230-1 presents a more prominent button shape in appearance, thereby further reinforcing to the user 140 that the previous content layout may be returned to by triggering the tab 230-1.

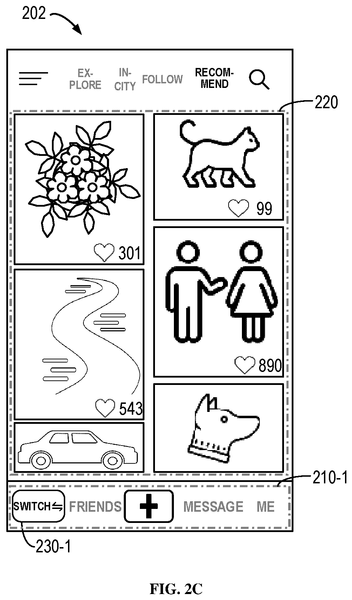

In other embodiments, the switchable state of the second content layout may comprise, for example, switching from the second content layout to a third content layout. The third content layout is different from the first content layout and the second content layout. In the interaction example 202 of FIG. 2C, the tab label of the tab 230-1 is adjusted to present a text "Switch", such description information prompting the user 140 that the content layout may be switched from the current dual-column browsing mode to a next layout style (e.g., dual-row browsing mode). In this way, the user 140 may be explicitly prompted with the switchable state of the current layout. The adjusted tab label of the tab 230-1 also presents the switch symbol " 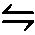 ," which further reinforces to the user 140 in a symbolized form that more different layout styles may be switched to by triggering the tab 230-1. In addition, the tab 230-1 presents a more prominent button shape in appearance, thereby further reinforcing to the user 140 that the content layout may be switched by triggering the tab 230-1.

In the above way, on one hand, the function of the tab 230-1 in the navigation area 210-1 may be expanded to further change the layout style in the content area 220 on the basis of implementing the interface redirections. In this way, the interaction function that can be implemented by means of the navigation area 210-1 may be expanded without enlarging the display area occupied by the navigation area 210-1 in the user interface, thereby improving the user experience. On the other hand, the user 140 may be taught to switch the content layout by means of the tab 230-1, which may effectively prevent the user 140 from exiting the application 120 due to not knowing how to switch the layout, thereby reducing the difficulty for the user 140 to use the application 120 and improving the user experience.

In some embodiments, the terminal device 110 may utilize a dynamic visual effect to present adjustments of the tab label. In the example of FIG. 2C, the content "Switch 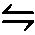 " of the adjusted tab label of the tab 230-1 may, for example, fly into the button area from right to left. Other examples of dynamic visual effects include, but are not limited to, appearing in the form of louvers, appearing in random lines, appearing in a flipped manner, and so on. In addition or alternatively, the terminal device 110 may conspicuously present the adjusted tab label, e.g., by highlighting, filling an area of the target tab 230 in a pattern of a particular color or shape, and so on. In this way, the user 140 may be enabled to notice the adjustment of the tab label, so that the switchable state of the current content layout is conveyed to the user 140 more effectively, and the user 140 may be guided to switch the content layout by operating the target tab 230, thereby further improving the use experience of the user 140.

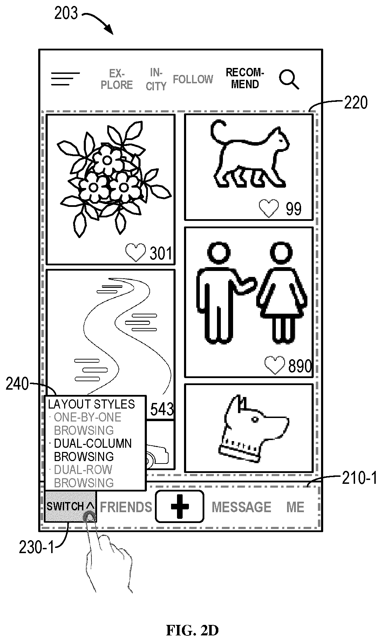

In some embodiments, in response to another triggering for the target tab 230, the terminal device 110 may present all selectable content layout styles for selection by the user 140. In an interaction example 203 of FIG. 2D, the adjusted tab label of the tab 230-1 presents the text "Switch", such description information prompting the user 140 that the content layout may be switched from the current dual-column browsing mode to the next layout style (e.g., dual-row browsing mode). Further, the adjusted tab label of the tab 230-1 also presents a switch symbol "^", which prompts the user 140 in a symbolized form that all selectable content layout styles may be presented by operating the tab 230-1. In response to the user 140 long pressing the control corresponding to the tab 230-1, e.g., by a finger, the terminal device 110 may present a submenu 240 in the interface 150, for example. The submenu 240 presents all the selectable content layout styles to the user 140 in the form of a list, i.e., a one-by-one browsing mode, a dual-column browsing mode, and a dual-row browsing mode. It is to be understood that the selectable content layout style may also comprise any other suitable layout style (e.g., a single-column browsing mode, a triple-row browsing mode, etc.). Moreover, the submenu may also be presented in any other suitable form, and the scope of the present disclosure is not limited in this respect.

In this way, the user 140 may be able to directly select the desired style from all the selectable content layout styles without a need of selection by switching one by one. Therefore, the selection of the content layout style by the user 140 may be facilitated, and the operation efficiency of the user 140 is further improved.

In some embodiments, the information included in the tab label before adjustment may be different from the information included in the tab label after adjustment. For example, the terminal device 110 may present description information for describing the target tab 230 in the tab label before adjustment. Alternatively or in addition, the terminal device 110 may present the switch symbol indicating the switchable state of the first content layout in the tab label before adjustment. Referring to FIG. 2A, the tab label of the tab 230-1 includes the text "Home", such description information indicating to the user 140 that the current tab 230-1 corresponds to the home of the application 120. In addition, the tab label of the tab 230-1 presents the switch symbol " 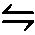 ", which indicates to the user 140 in the symbolized form that the content layout may be switched by operating the tab 230-1. In this way, while the tab information is provided, the switchable state of the content layout may be intuitively prompted to the user 140, thereby guiding the user 140 to try different content layout styles for the optimal browsing experience.

It is to be understood that the contents of the tab labels mentioned above are merely illustrative and not limiting. The tab labels may also include any other suitable contents, such as icons, pictures, and the like. The scope of the present disclosure is not limited in this respect.

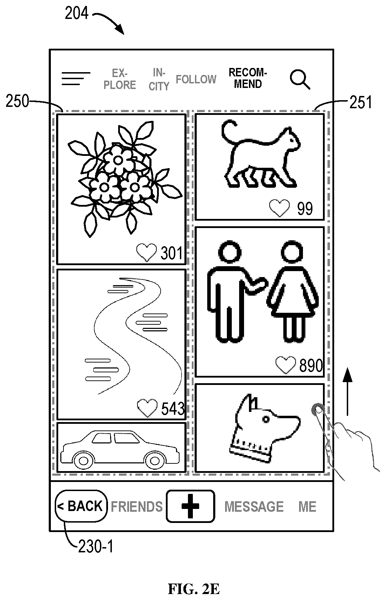

In some embodiments, in the case where the plurality of media contents are presented in the form of multiple tabs, in response to a control operation associated with one of the multiple columns, the terminal device 110 may control the column to achieve the effect corresponding to the control operation in a manner different from the rest of the multiple columns. Referring to an interaction example 204 shown in FIG. 2E, the terminal device 110 presents the plurality of media contents in two columns (i.e., a column 250 and a column 251). In response to that the user 140 is detected to swipe up by a finger in the area corresponding to the column 251, the terminal device 110 may, for example, correspondingly update the media contents presented in the column 251 by scrolling up, while keeping the media contents presented in the column 250 unchanged, that is, no corresponding scrolling occurs. In this example, the control for the column 251 is independent of the remaining columns (i.e., the column 250) in the content area 220. For another example, the terminal device 110 may update the media contents presented in the column 251 by scrolling up at a first speed while updating the media contents presented in the column 250 by scrolling up at a second speed. The second speed may be greater than or less than the first speed. Also for example, the terminal device 110 may update the media contents presented in the column 251 by scrolling up while updating the media content presented in the column 250 by scrolling down.

For example, when it is detected that the user 140 performs a zoom-in gesture (e.g., opening and closing two fingers) in the area corresponding to the column 251 (not shown), the terminal device 110 may correspondingly zoom in the media contents presented in the column 251, while keeping the media contents presented in the column 250 unchanged, i.e., without zooming. In this example, the control for the column 251 is independent of the remaining columns (i.e., column 250) in the content area 220. For another example, the terminal device 110 may zoom in the media contents presented in the column 251 in a first proportion and zoom in the media contents presented in the column 250 in a second proportion. The second proportion may be greater than or less than the first proportion. Also for example, the terminal device 110 may zoom in the media contents presented in the column 251 while zooming out the media contents presented in the column 250. It is to be understood that the control operations and effects described above are illustrative only and not limiting. The scope of the present disclosure is not limited in this respect.

Alternatively or in addition, in the case where the plurality of media contents are presented in the form of multiple rows, in response to a control operation associated with one of the multiple rows, the terminal device 110 may control the row to achieve the effect corresponding to the control operation in a manner different from the remaining rows of the multiple rows. This may be achieved in a manner similar to the manner described above for the multiple columns, and therefore the present disclosure is not repeated herein.

In this way, on one hand, more diversified ways of interaction may be provided for the user 140, thereby improving the interaction experience and the browsing efficiency of the user 140. On the other hand, in response to that the control for one column (or row) in multiple columns (or rows) is independent of the remaining columns (or rows) in the multiple columns (or rows), the user 140 may be able to perform more refined control for the contents presented in the content area 220, thereby further improving the operation efficiency of the user 140 and improving the user experience.

As can be seen from the descriptions above with reference to FIG. 1 and FIGS. 2A to 2E, in an interaction solution according to embodiments of the present disclosure, the target interface including the navigation area and the content area is presented. Further, in response to detecting the predetermined operation, the layout of the contents corresponding to the target tab presented in the content area is changed, and the tab label of the target tab is adjusted to indicate the switchable state of the current content layout.

In this way, on one hand, the function of the tab in the navigation area may be expanded to be used for switching of the layout used for presenting the contents of the current tab on the basis of implementing the interface redirections. In this way, the interaction function that can be achieved by means of the navigation area may be expanded without enlarging the display area occupied by the navigation area in the user interface, thereby improving the user experience. On the other hand, by indicating the switchable state of the content layout in the adjusted tab label of the current tab, the user may be effectively prompted to switch the content layout by means of the control corresponding to the current tab. In this way, the difficulty for the user to adapt to the expanded function may be reduced, and the convenience for the user to switch the content layout by the user may be improved, thereby improving the user operation efficiency.

### Example Methods

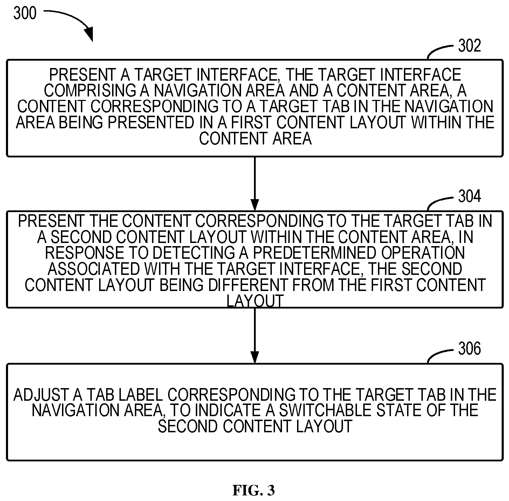

FIG. 3 illustrates a flowchart of an interaction method 300 according to some embodiments of the present disclosure. In some embodiments, the method 300 may be performed at the terminal device 110 as shown in FIG. 1. It is to be understood that the method 300 may further comprise not shown additional blocks and/or may omit some block(s) shown, and the scope of the present disclosure is not limited in this respect.

At block 302, a target interface is presented. The target interface comprises a navigation area and a content area. A content corresponding to a target tab in the navigation area is presented in a first content layout within the content area. At block 304, the content corresponding to the target tab is presented in a second content layout within the content area, in response to detecting a predetermined operation associated with the target interface. The second content layout is different from the first content layout. At block 306, the tab label corresponding to the target tab in the navigation area is adjusted, to indicate a switchable state of the second content layout.

In some embodiments, the switchable state of the second content layout comprises switching back to the first content layout from the second content layout, or switching from the second content layout to a third content layout, the third content layout being different from the first content layout and the second content layout.

In some embodiments, the tab label presents at least one of: description information for describing a switchable state of a content layout in the target tab or the content area; a switch symbol indicating a switchable state of the content layout in the content area.

In some embodiments, the adjusting of the tab label is presented with a dynamic visual effect.

In some embodiments, the predetermined operation comprises triggering for the target tab, or a gesture corresponding to a target direction in the target interface.

In some embodiments, the method 300 further comprises: obtaining motion information of an electronic device for presenting the target interface; and detecting the predetermined operation associated with the target interface based on the motion information.

In some embodiments, the target tab comprises a switch control for switching the content layout of the content corresponding to the target tab.

In some embodiments, the second content layout indicates that a plurality of media contents are presented in rows or columns in the content area.

In some embodiments, the second content layout further indicates that the plurality of media contents are presented in a plurality of rows or a plurality of columns in the content area.

In some embodiments, the first content layout indicates that a single media content is presented in the content area.

### Example Apparatus and Apparatus

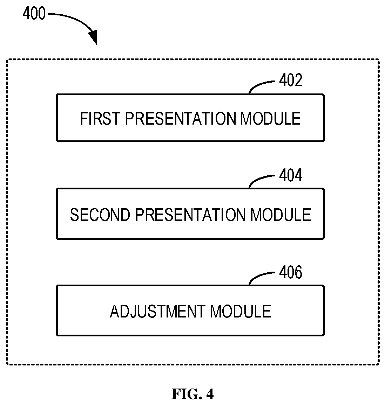

Embodiments of the present disclosure also provide corresponding apparatuses and devices for implementing the method or process described above. FIG. 4 illustrates a block diagram of an example apparatus 400 for interaction according to some embodiments of the present disclosure. The apparatus 400 may be used, for example, to implement a method according to embodiments of the present disclosure. The apparatus 400 may comprise a first presentation module 402, a second presentation module 404, and an adjustment module 406. The first presentation module 402 is configured to present a target interface, where the target interface comprises a navigation area and a content area, and content corresponding to a target tab in the navigation area is presented in a first content layout in the content area. The second presentation module 404 is configured to present the content corresponding to the target tab in a second content layout within the content area, in response to detecting a predetermined operation associated with the target interface, the second content layout being different from the first content layout. The adjustment module 406 is configured to adjust a tab label corresponding to the target tab in the navigation area, to indicate a switchable state of the second content layout.

In some embodiments, the switchable state of the second content layout comprises switching back to the first content layout from the second content layout, or switching from the second content layout to a third content layout, the third content layout being different from the first content layout and the second content layout.

In some embodiments, the tab label presents at least one of: description information for describing the switchable state of a content layout in the target tab or the content area; or a switch symbol indicating the switchable state of the content layout in the content area.

In some embodiments, the adjusting of the tab label is presented with a dynamic visual effect.

In some embodiments, the predetermined operation comprises: triggering for the target tab, or a gesture corresponding to a target direction in the target interface.

In some embodiments, the apparatus 400 further comprises an obtaining module and a detection module. The obtaining module is configured to obtain motion information of an electronic device for presenting the target interface. The detection module is configured to detect the predetermined operation associated with the target interface based on the motion information.

In some embodiments, the target tab comprises a switch control for switching the content layout of the content corresponding to the target tab.

In some embodiments, the second content layout indicates that a plurality of media contents are presented in a row or a column in the content area.

In some embodiments, the second content layout further indicates that the plurality of media content are presented in a plurality of rows or a plurality of columns in the content area.

In some embodiments, the first content layout indicates that a single media content is presented in the content area.

The modules and/or units comprised in the apparatus 400 may be implemented in various ways, including software, hardware, firmware, or any combination thereof. In some embodiments, one or more units may be implemented using software and/or firmware, such as machine-executable instructions stored on a storage medium. In addition to or as an alternative to the machine-executable instructions, some or all of units in the apparatus 400 may be implemented, at least in part, by one or more hardware logic components. By way of example and not limitation, exemplary types of hardware logic components that may be used include field-programmable gate arrays (FPGAs), application-specific integrated circuits (ASICs), application-specific standards (ASSP), system-on-a-chip (SOC), complex programmable logic devices (CPLDs), and the like.

The modules and/or units shown in FIG. 4 may be implemented in part or in whole as a hardware module, a software module, a firmware module, or any combination thereof. In particular, in certain embodiments, the flows, methods, or processes described above may be implemented by a storage system or a host corresponding to the storage system or hardware in other computing devices independent of the storage system.

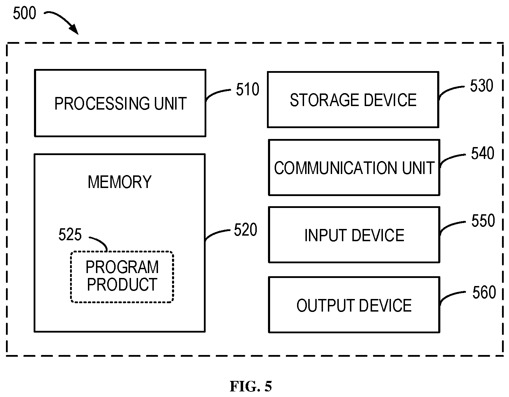

FIG. 5 illustrates a block diagram of a device 500 in which one or more embodiments of the present disclosure may be implemented. It is to be understood that the electronic device 500 shown in FIG. 5 is merely exemplary and should not constitute any limitation on the function and scope of the embodiments described herein. The electronic device 500 shown in FIG. 5 may be used to implement the terminal device 110 shown in FIG. 1 and/or the method described above.

As shown in FIG. 5, the electronic device 500 is in the form of a general-purpose electronic device. Components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and capable of performing various processes according to programs stored in the memory 520. In multi-processor systems, multiple processing units execute computer-executable instructions in parallel to improve the parallel processing capabilities of the electronic device 500.

The electronic device 500 typically comprises a plurality of computer storage medium. Such medium may be any available medium accessible to the electronic device 500, including, but not limited to, volatile and non-volatile medium, removable and non-removable medium. The memory 520 may be volatile memory (e.g., registers, caches, random access memory (RAM)), non-volatile memory (e.g., read-only memory (ROM), electrically erasable programmable read-only memory (EEPROM), flash memory), or some combination thereof. The storage device 530 may be a removable or non-removable medium and may comprise a machine-readable medium, such as a flash drive, a disk, or any other medium, which may be capable of storing information and/or data (e.g., training data for training) and may be accessed within the electronic device 500.

The electronic device 500 may further comprise additional removable/non-removable, volatile/non-volatile storage medium. Although not shown in FIG. 5, a disk drive for reading from or writing to a removable, nonvolatile disk (e.g., a "floppy disk") and an optical disk drive for reading from or writing to a removable, nonvolatile optical disk may be provided. In these cases, each drive may be connected to a bus (not shown) by one or more data medium interfaces. The memory 520 may comprise a computer program product 525 having one or more program modules configured to perform various methods or actions of various implementations of the present disclosure.

The communication unit 540 enables communication with other electronic devices through a communication medium. Additionally, the functionality of components of the electronic device 500 may be implemented in a single computing cluster or multiple computing machines which are capable of communication over a communication connection. Thus, the electronic device 500 may operate in a networked environment using logical connections with one or more other servers, network personal computers (PC), or another network node.

The input device 550 may be one or more input devices, for example, a mouse, a keyboard, a trackball, or the like. The output device 560 may be one or more output devices, for example, a display, a speaker, a printer, or the like. The electronic device 500 may also communicate with one or more external devices (not shown) through the communication unit 540 as needed, the external devices such as storage devices, display devices, etc., communicate with one or more devices that enable a user to interact with the electronic device 500, or communicate with any device (e.g., a network card, a modem, etc.) that enables the electronic device 500 to communicate with one or more other electronic devices. Such communication may be performed via an input/output (I/O) interface (not shown).

According to an exemplary implementation of the present disclosure, there is provided a computer-readable storage medium having computer-executable instructions stored thereon, wherein the computer-executable instructions are executed by the processor to implement the method described above. According to an exemplary implementation of the present disclosure, there is also provided a computer program product tangibly stored on a non-transitory computer-readable medium and including computer-executable instructions, the computer-executable instructions being executed by the processor to implement the method described above. According to an exemplary implementation of the present disclosure, there is provided a computer program product having a computer program stored thereon, which implements the method described above when being executed by the processor.

Aspects of the present disclosure are described herein with reference to flowcharts and/or block diagrams of methods, apparatuses, devices, and computer program products implemented in accordance with the present disclosure. It is to be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by the processing unit of a computer or other programmable data processing apparatus, produce means to implement the functions/acts specified in the flowchart and/or block diagram. These computer-readable program instructions may also be stored in a computer-readable storage medium, these instructions cause the computer, programmable data processing apparatus, and/or other devices to function in a particular manner, such that the computer-readable medium storing instructions comprises an article of manufacture including instructions to implement aspects of the functions/acts specified in one or more blocks in the flowchart and/or block diagrams.

The computer-readable program instructions may be loaded onto a computer, other programmable data processing apparatus, or other apparatus, such that a series of operational steps are performed on the computer, other programmable data processing apparatus, or other apparatus to produce a computer-implemented process, such that the instructions executed on the computer, other programmable data processing apparatus, or other apparatus implement the functions/acts specified in one or more blocks in the flowchart and/or block diagram block.

The flowchart and block diagrams in the drawings show the architecture, function, and operation of possible implementations of systems, methods, and computer program products according to various implementations of the present disclosure. In this respect, each block in the flowchart or block diagram may represent a module, a program segment, or a part of instructions, which comprises one or more executable instructions for implementing the specified logical function. In some alternative implementations, the functions noted in the blocks may also occur in a different order than noted in the drawings. For example, two consecutive blocks may actually be performed substantially in parallel, which may sometimes be performed in the reverse order, depending on the function involved. It is also noted that each block in the block diagrams and/or flowchart, as well as combinations of the blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are exemplary, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, the practical applications, or the improvements to techniques in the marketplace, or to enable others of ordinary skill in the art to understand the various implementations disclosed herein.

## Claims

1. A method for interacting, comprising:
presenting a target interface, the target interface comprising a navigation area and a content area, a content corresponding to a target tab in the navigation area being presented in a first content layout within the content area;
presenting the content corresponding to the target tab in a second content layout within the content area, in response to detecting a predetermined operation associated with the target interface, the second content layout being different from the first content layout; and
adjusting a tab label corresponding to the target tab in the navigation area, to indicate a switchable state of the second content layout.

2. The method of claim 1, wherein the switchable state of the second content layout comprises:
switching back to the first content layout from the second content layout, or
switching from the second content layout to a third content layout, the third content layout being different from the first content layout and the second content layout.

3. The method of claim 1, wherein the tab label presents at least one of:
description information for describing a switchable state of a content layout in the target tab or the content area, or
a switch symbol indicating the switchable state of the content layout in the content area.

4. The method of claim 1, wherein the adjusting of the tab label is presented with a dynamic visual effect.

5. The method of claim 1, wherein the predetermined operation comprises: triggering for the target tab, or a gesture corresponding to a target direction in the target interface.

6. The method of claim 1, further comprising:
obtaining motion information of an electronic device for presenting the target interface; and
detecting the predetermined operation associated with the target interface based on the motion information.

7. The method of claim 1, wherein the target tab comprises a switch control for switching a content layout of the content corresponding to the target tab.

8. The method of claim 1, wherein the second content layout indicates that a plurality media contents are presented in a row or a column within the content area.

9. The method of claim 8, wherein the second content layout further indicates that the plurality of media contents are presented in a plurality of rows or a plurality of columns in the content area.

10. The method of any one of claims 1-9, wherein the first content layout indicates that a single media content is presented in the content area.

11. An apparatus for interacting, comprising:
a first presentation module configured to present a target interface, the target interface including a navigation area and a content area, a content corresponding to a target tab in the navigation being presented in a first content layout within the content area;
a second presentation module configured to present the content corresponding to the target tab in a second content layout within the content area, in response to detecting a predetermined operation associated with the target interface, the second content layout being different from the first content layout; and
an adjustment module configured to adjust a tab label corresponding to the target tab in the navigation area, to indicate a switchable state of the second content layout.

12. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1-10.

13. A computer-readable storage medium having stored thereon a computer program which, when executed by a processor, causes the processor to implement the method of any of claims 1-10.
